# EUROPEAN PATENT SPECIFICATION

(11) **EP 2 000 229 B1**
(45) Date of publication and mention of the grant of the patent: **15.07.2009**
(21) Application number: 07109548.3
(22) Date of filing: 04.06.2007
(51) Int. Cl.: B21D 39/04, B25B 27/10, F16L 13/14

(54) **Pressfitting collar for pipe pressing tongs**
Presseinsatz für ein Presswerkzeug zum Pressfitting von Rohren
Collier de raccord de tuyaux pour pince de serrage de tuyaux

(43) Date of publication of application: 10.12.2008
(73) Proprietor: C.B.C. S.p.A., I-42016 Guastalla (Reggio Emilia) (IT)
(72) Inventor: Vezzani, Giorgio, 42016 Guastalla (RE) (IT)
(74) Representative: Ripamonti, Enrico

(56) References cited:
- EP-A- 0 791 433
- EP-A- 1 208 949
- EP-A- 1 389 500
- DE-A1-0102004 016 11
- US-A- 6 044 681

## Description

The present invention relates to pipe pressing tongs, according to the preamble of claim 1.

As known to the expert of the art, these tongs, usually operated by a suitable operating device (normally of hydraulic type), enable two pipe pieces to be joined together by an internal tubular connector with interposed O-rings and an external metal sleeve on which the tongs pressing action is exerted, to hence form the sealed joint.

The pressfitting action is exerted on said metal sleeve via an open pressing collar forming part of the tongs. This collar comprises at least two jaws hinged together. Each jaw presents a relative pressfitting element provided with an arched inner surface with a radius of curvature suitable for the pipe joint to be obtained. The collar is interchangeable to enable collars suitable for the different pressfitting diameters to be mounted.

To be able to effect pressfitting, said collar does not completely enclose (i.e. through 360°) the metal sleeve of the joint, a space remaining between the pressfitting elements corresponding to the two ends of the collar, this space enabling the pressfitting operation to be carried out and being taken up when the pressfitting operation is complete.

This type of sealed pipe joint is increasingly more utilized, the pipe diameters for which it is used being gradually increased (now up to 32 mm and more). The increase in pipe diameter has highlighted a serious drawback due to the fact that in the region in which the two end edges of the collar are brought into contact by the pressfitting operation, a material accumulation takes place on the external metal sleeve to form a projecting longitudinal fold on the sleeve. In practice the metal sleeve is "pinched" by the two opposing end edges of the collar. The consequence is that the resultant fold forms a point of possible breakage. In this respect it has been found that even at the compulsory testing stage on samples of such jointing, during which the joint is subjected to temperature fluctuations (from 90 to 5°C), fractures can occur at said fold. The problems which could occur in reality can be easily imagined, for example in a heating unit which also operates as an air conditioner in the summer, a situation which subjects the joint to particularly severe conditions.

In an attempt to overcome this serious problem, US-A-6044681 describes a collar (see Figures 10 and 11 thereof in particular), an end edge of which has a profile (observing it in a direction perpendicular to the pipe axis) presenting a projecting triangular tooth in its central part, whereas the remainder of the profile (before and after said tooth) is rectilinear. The other end edge has obviously a profile which mates with that of the first edge. Figures 10 and 11 of US-A-6044681 show particularly the situation just after commencement of the pressfitting operation, it being noted that the vertex of the triangular tooth of the first profile is slightly withdrawn from the straight line on which the two rectilinear portions of the second profile lie, these lying to the sides of the triangular indentation which mates with said triangular tooth of the first profile.

Although this contributes to reducing the aforedescribed drawback, it has however been observed that in large-diameter pipes folds still form at said two rectilinear portions due to material accumulation.

An object of the present invention is therefore to provide a pressfitting collar for pipe pressing tongs which enables said drawback to be completely overcome.

This object is attained by virtue of the pressfitting collar according to claim 1.

Preferably the triangles of the two mateable profiles are all identical, even though they can be different (provided that mateability of the two profiles is ensured). Conveniently said triangles are isosceles triangles, with the angle at the major base greater than 45°, more preferably 60°.

The absence of rectilinear portions parallel to the pipe axis in the two mateable profiles, together with the presence of that known hereinafter for simplicity as mutual partial copenetration (which can however also be zero) of the vertices of the triangular teeth of the two profiles, enables the required result of obtaining a joint free of folds due to material accumulation to be obtained.

The invention will be more apparent from the ensuing description of one embodiment thereof given by way of example. In this description reference will be made to the accompanying drawing, in which:
Figure 1 is a side view of the pressfitting collar of the present invention, shown at the end of the pressfitting operation;
Figure 2 is a view in the direction of the arrow 2 of Figure 1;
Figure 3 shows only the mutual position of the said profiles just prior to commencement of the pressfitting operation;
Figure 4 is a section on the line 4-4 of Figure 1.

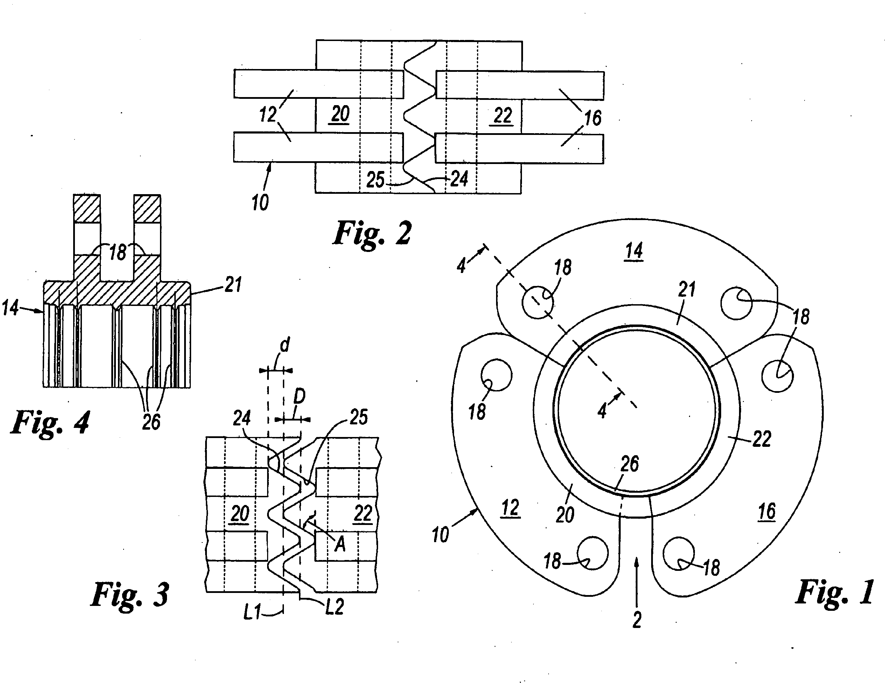

Figure 1 shows a pressfitting collar indicated overall by 10. It comprises in this specific case three jaws, 12, 14 and 16 respectively, connected together by connecting rods and relative pins (neither shown for simplicity) inserted into corresponding through holes 18 provided in the jaws. Each jaw is provided with a relative arched pressfitting element 20, 21 and 22 respectively, of which the inner face, which makes contact with the pipe joint, has a radius of curvature suitable for the relative diameter.

Just prior to pressfitting, the collar 10 is in the condition shown in Figure 3, in which the adjacent profiles, 24 and 25 respectively, of the relative ends of the pressfitting elements, 20 and 22 respectively, of the corresponding jaws 12 and 16, are spaced apart, whereas on termination of pressfitting (Figures 1 and 2) the profiles 24 and 25 have mated.

As can be seen from Figures 2 and 3, the profiles 24 and 25 consist of a continuous series of triangular teeth, so that rectilinear portions parallel to the pipe joint axis are not present in them (as instead they are in the solution illustrated in the already mentioned Figure 11 of US-A-6044681).

Moreover, as can be seen in Figure 3, the vertex edges of the triangular teeth of the two profiles 24 and 25 copenetrate slightly, in the sense that the straight line L₁ joining the vertices of the profile 25 lies to the left of the straight line L₂ joining the vertices of the profile 24, the distance (or the "copenetration" of the teeth of the two profiles) between the two straight lines L₁ and L₂ being indicated by D.

It has been shown that to ensure the required result, D must be ≥ 0. In practice, for greater assurance, D should be as large as possible compatible with the approach distance d of the two profiles 24 and 25 (for mating purposes) necessary for carrying out the pressfitting operation.

As can be seen from Figures 2 and 3, the teeth forming the two mateable profiles 24 and 25 are in the form of isosceles triangles, with the angle A (Figure 3) of 60°. From Figures 2 and 3 it can also be seen that the vertex edges of the triangular teeth of the profiles 24 and 25 are slightly chamfered, as is also slightly chamfered (although not visible in the figures) the end of each vertex edge which materially comes into contact with the metal sleeve to be pressed, to prevent seizure during pressfitting.

From Figure 4 it can be seen that the pressfitting element 21 (the same also being valid for the other two pressfitting elements 20 and 22) presents five inwardly projecting circumferential ribs indicated by 26. These are the ribs conventionally provided for sealing the joint.

In conclusion, it is important to note that the aforedescribed pressfitting collar for pipe pressing tongs enables reliable and safe joints to be made between pipe pieces, even of large diameter, including for plants subjected to particularly severe working conditions.

It should be remembered that prior to the present invention, in order to ensure reliability and safety of pipe joints in plants subjected to severe working conditions, pipe pressing tongs could of necessity not be used to make such joints, and instead other types of jointing had to be used.

## Claims

1. A pressfitting collar (10) for pipe pressing tongs, comprising at least two jaws (12, 14, 16) hinged together, each comprising an arched pressfitting element (20, 21, 22) with a radius of curvature suitable for the pipe joint to be made, the pressfitting elements (20, 21, 22) each covering, just prior to the pressfitting operation, a relative part of the pipe joint circumference except for a portion of said circumference corresponding to the distance (d) between the facing end edges (24, 25) of the pressfitting elements (20, 22) of the two end jaws (12, 16) of the collar (10), the two end edges (24, 25) having respective shaped profiles which mutually mate on completion of the pressfitting operation, **characterised in that** the profiles of the two end edges (24, 25) are shaped completely as consecutive triangular teeth without rectilinear portions parallel to the pipe joint axis, and **in that**, in use, at the start of the pressfitting operation, the straight line (L₁) joining the vertices of two consecutive triangular teeth of one (25) of the two edge profiles coincides with, or passes a certain distance beyond, the straight line (L₂) joining the vertices of two corresponding consecutive triangular teeth of the other edge profile (24).

2. A pressfitting collar (10) as claimed in claim 1, wherein the triangles of the two mateable profiles (24, 25) are all identical.

3. A pressfitting collar (10) as claimed in claim 1, wherein the triangles are isosceles triangles.

4. A pressfitting collar (10) as claimed in claim 3, wherein the isosceles triangles have an angle (A) at their base greater than 45°.

5. A pressfitting collar (10) as claimed in claim 4, wherein the angle (A) at the base of the isosceles triangles is of 60°.

6. A pressfitting collar (10) as claimed in claim 1, wherein the vertex edges of the triangular teeth of the profiles (24) and (25) are chamfered.

7. A pressfitting collar (10) as claimed in claim 1, wherein the jaws of the collar (10) are three in number (12, 14, 16).

8. A pressfitting collar (10) as claimed in claim 1, wherein the pressfitting elements (20, 21, 22) have their group of circumferential ribs (26) projecting inwards for joint sealing.

## Patentansprüche

1. Pressfitting-Zwinge (10) für Rohrpresszangen, welche zumindest zwei miteinander gelenkig verbundene Backen (12, 14, 16) aufweist, von denen jede ein gekrümmtes Pressfitting-Element (20, 21, 22) mit einem für die zu bildende Rohrverbindung passenden Krümmungsradius aufweist, wobei die Pressfitting-Elemente (20, 21, 22) unmittelbar vor dem Pressfitting-Verfahren jeweils einen entsprechenden Teil des Umfangs der Rohrverbindung bedecken, mit Ausnahme eines Teils des besagten Umfangs, welcher der Entfernung (d) zwischen den zugewandten Endrändern (24, 25) der Pressfitting-Elemente (20, 22) der zwei Endbacken (12, 16) der Zwinge (10) entspricht, wobei die zwei Endränder (24, 25) jeweils mit Profilen ausgebildet sind, die nach dem Durchführen des Pressfitting-Vorgangs gegenseitig ineinandergreifen, **dadurch gekennzeichnet, dass** die Profile der zwei Endränder (24, 25) vollständig als aufeinanderfolgende dreieckige Zähne ohne geradlinige, parallel zu der Rohrverbindungsachse verlaufende Abschnitte ausgebildet sind, und **dadurch**, dass während der Verwendung, am Beginn des Pressfitting-Vorgangs, die gerade Linie (L₁), welche die Scheitel von zwei aufeinanderfolgenden dreieckigen Zähnen von einem (25) der zwei Endprofile verbindet, mit der geraden Linie (L₂), welche die Scheitel von zwei entsprechenden aufeinanderfolgenden dreieckigen Zähnen des anderen Endprofils (24) verbindet, zusammenfällt oder in einer gewissen Entfernung darunter verläuft.

2. Pressfitting-Zwinge (10) nach Anspruch 1, wobei die Dreiecke der zwei miteinander in Eingriff bringbaren Profile (24, 25) alle identisch sind.

3. Pressfitting-Zwinge (10) nach Anspruch 1, wobei die Dreiecke gleichschenkelige Dreiecke sind.

4. Pressfitting-Zwinge (10) nach Anspruch 3, wobei die gleichschenkeligen Dreiecke einen Winkel (A) an ihrer Basis aufweisen, der größer ist als 45°.

5. Pressfitting-Zwinge (10) nach Anspruch 4, wobei der Winkel (A) an der Basis der gleichschenkligen Dreiecke 60° beträgt.

6. Pressfitting-Zwinge (10) nach Anspruch 1, wobei die Scheitelkanten der dreieckigen Zähne der Profile (24) und (25) abgeschrägt bzw. abgerundet sind.

7. Pressfitting-Zwinge (10) nach Anspruch 1, wobei die Zwinge (10) drei Backen (12, 14, 16) aufweist.

8. Pressfitting-Zwinge (10) nach Anspruch 1, wobei die Presssitz-Elemente (20, 21, 22) eine Gruppe entlang des Umfangs verlaufender Rippen (26) aufweisen, welche für die Versiegelung der Verbindung nach innen hin vorstehen.

## Revendications

1. Collier d'ajustement par pression (10) pour des pinces de serrage de tuyaux, comprenant au moins deux mâchoires (12, 14, 16) articulées l'une avec l'autre, comprenant chacune un élément d'ajustement par pression (20, 21, 22) en forme d'arc avec un rayon de courbure approprié pour le raccord de tuyau à réaliser, les éléments d'ajustement par pression (20, 21, 22) recouvrant chacun, juste avant l'opération d'ajustement par pression, une partie relative de la circonférence de raccord de tuyau à l'exception d'une partie de ladite circonférence correspondant à la distance (d) entre les bords d'extrémité (24, 25) se faisant face des éléments d'ajustement par pression (20, 22) des deux mâchoires d'extrémité (12, 16) du collier (10), les deux bords d'extrémité (24, 25) ayant des profils formés respectifs qui s'accouplent mutuellement à la fin de l'opération d'ajustement par pression, **caractérisé en ce que** les profils des deux bords d'extrémité (24, 25) sont formés complètement comme des dents triangulaires consécutives sans parties rectilignes parallèles à l'axe de raccord de tuyau, et **en ce que**, en utilisation, au début de l'opération d'ajustement par pression, la droite (L₁) joignant les sommets de deux dents triangulaires consécutives de l'un (25) des deux profils de bord coïncide avec la droite (L₂) joignant les sommets de deux dents triangulaires consécutives correspondantes de l'autre profil de bord (24), ou passe à une certaine distance au-delà de celle-ci.

2. Collier d'ajustement par pression (10) selon la revendication 1, dans lequel les triangles des deux profils (24, 25) pouvant être accouplés sont tous identiques.

3. Collier d'ajustement par pression (10) selon la revendication 1, dans lequel les triangles sont des triangles isocèles.

4. Collier d'ajustement par pression (10) selon la revendication 3, dans lequel les triangles isocèles ont un angle (A) à leur base supérieur à 45°.

5. Collier d'ajustement par pression (10) selon la revendication 4, dans lequel l'angle (A) à la base des triangles isocèles est de 60°.

6. Collier d'ajustement par pression (10) selon la revendication 1, dans lequel les bords du sommet des dents triangulaires des profils (24) et (25) sont chanfreinés.

7. Collier d'ajustement par pression (10) selon la revendication 1, dans lequel les mâchoires du collier (10) sont au nombre de trois (12, 14, 16).

8. Collier d'ajustement par pression (10) selon la revendication 1, dans lequel les groupes de nervures circonférentielles (26) des éléments d'ajustement par pression (20, 21, 22) font saillie vers l'intérieur pour réaliser l'étanchéité du raccord.
